# EUROPEAN PATENT APPLICATION

(11) **EP 2 410 787 A1**
(43) Date of publication of application: **25.01.2012**
(21) Application number: 10753442.2
(22) Date of filing: 10.03.2010
(51) Int. Cl.: H04W 28/06, H04J 11/00, H04J 13/04, H04L 29/08, H04W 24/10, H04W 72/04

(54) **MOBILE TERMINAL APPARATUS AND WIRELESS COMMUNICATION METHOD**

(30) Priority: 16.03.2009 JP 2009063616
(71) Applicant: NTT DOCOMO, INC., Chiyoda-ku Tokyo 100-6150 (JP)
(72) Inventor: KAWAMURA, Teruo, Tokyo 100-6150 (JP); KISHIYAMA, Yoshihisa, Tokyo 100-6150 (JP); SAWAHASHI, Mamoru, Tokyo 100-6150 (JP)
(74) Representative: HOFFMANN EITLE
(86) International application number: PCT/JP2010/054006
(87) International publication number: WO 2010/106950

(57) **Abstract**

To provide a mobile terminal apparatus and radio communication method for enabling feedback control information to be efficiently transmitted with an uplink control channel signal, the radio communication method of the invention has, in a mobile terminal apparatus, the steps of receiving a signal for each of a plurality of component carriers from a radio base station apparatus, generating feedback control information for each component carrier from the signal, performing joint-cording on the feedback control information for each component carrier, mapping the feedback control information coded by the joint-coding to subcarriers, and transmitting an uplink transmission signal mapped to the subcarriers.

## Description

### TECHNICAL FIELD

The present invention relates to a mobile terminal apparatus and a radio communication method in the next-generation mobile communication system.

### BACKGROUND ART

In UMTS (Universal Mobile Telecommunications System) networks, for the purpose of improving frequency usage efficiency and further improving data rates, by adopting HSDPA (High Speed Downlink Packet Access) and HSUPA (High Speed Uplink Packet Access), it is performed exploiting maximum features of the system based on W-CDMA (Wideband Code Division Multiple Access) . For the UMTS network, for the purpose of further increasing high-speed data rates, providing low delay and the like, Long Term Evolution (LTE) has been studied (Non-patent Document 1) . In LTE, as a multiplexing scheme, OFDMA (Orthogonal Frequency Division Multiple Access) different from W-CDMA is used in downlink, and SC-FDMA (Single Carrier Frequency Division Multiple Access) is used in uplink.

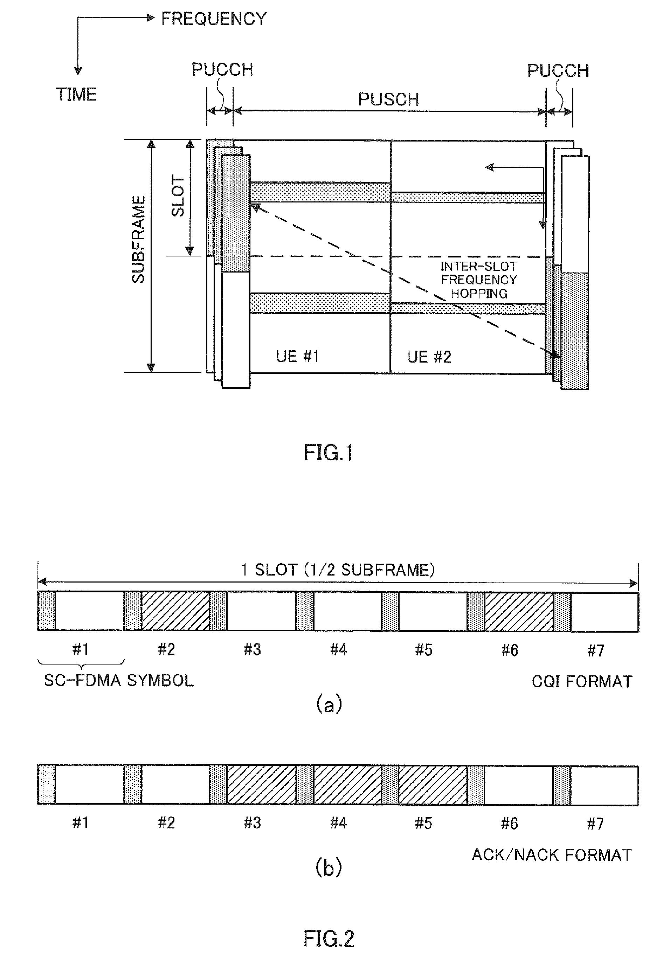

Uplink signals transmitted in uplink are transmitted from a mobile terminal apparatus to a radio base station apparatus as shown in FIG. 1. In this case, user data (UE (User Equipment) #1, UE#2) is assigned to the uplink shared channel (PUSCH: Physical Uplink Shared Channel), and control information is time-multiplexed with the PUSCH when the control information is transmitted concurrently with the user data, while being assigned to the uplink control channel (PUCCH: Physical Uplink Control Channel) when only the control information is transmitted. The uplink control channel transmits downlink quality information (CQI: Channel Quality Indicator), retransmission response (ACK/NACK) to the downlink shared channel, etc.

In the PUCCH, different subframe structures are adopted between the CQI and ACK/NACK (FIG. 2). In the subframe structure as shown in FIG. 2, one slot (1/2 subframe) includes 7 SC-FDMA symbols . Further, one SC-FDMA symbol includes 12 information symbols (subcarriers). More specifically, as shown in FIG. 2(a), in the subframe structure (CQI format) of the CQI, a reference signal (RS) is multiplexed into the second symbol (#2) and the sixth symbol (#6), and the control information (CQI) is multiplexed into the other symbols (the first symbol, the third to the fifth symbols, the seventh symbol) in a slot. Meanwhile, as shown in FIG. 2(b), in the subframe structure (ACK/NACK format) of ACK/NACK, a reference signal (RS) is multiplexed into the third symbol (#3) to the fifth sixth symbol (#5), and the control information (ACK/NACK) is multiplexed into the other symbols (the first symbol (#1), the second symbol (#2), the sixth symbol (#6), the seventh symbol (#7)) in a slot. In one subframe, the slot is repeated twice. Further, as shown in FIG. 1, frequency hopping is applied to two slots in one subframe.

### CITATION LIST

### NON-PATENT LITERATURE

[Non-patent Literature 1] 3GPP, TR25.912 (V7.1.0),"Feasibility study for Evolved UTRA and UTRAN", Sep. 2006

### SUMMARY OF THE INVENTION

### TECHNICAL PLOBLEM

In the 3G system, a fixed band of 5 MHz is substantially used, and it is possible to achieve transmission rates of approximately maximum 2 Mbps in downlink. Meanwhile, in the LTE scheme system, using variable bands ranging from 1.4 MHz to 20 MHz, it is possible to achieve transmission rates of maximum 300 Mbps in downlink and about 75 Mbps in uplink. Further, in the UMTS network, for the purpose of further increasing the wide-band and high speed, successor systems to LTE have been studied (for example, LTE Advanced (LTE-A)).

In the LTE-A system, for the purpose of further improving frequency usage efficiency, peak throughput, etc. assignments of frequencies with wider bands than in LTE have been studied. Further, in LTE-A, having Backward Compatibility with LTE is one of requirements, and therefore, adopted is a configuration of a transmission band with a plurality of base frequency blocks (component carriers: CC) each having a bandwidth capable of being used in LTE. Therefore, the feedback control information for a data channel transmitted by a plurality of downlink CCs increases by number-of-CC times. Further, in addition to the feedback control information of LTE of ACK/NACK, CQI, and PMI (Precoding Matrix Indicator), increases are thought also in the feedback control information specific to LTE-A in multi-cell coordinated transmission/reception techniques, higher order MIMO, etc. Therefore, since the information amount of the feedback control information increases, it is necessary to study transmission methods of feedback control information on the PUCCH.

The present invention was made in view of such a respect, and it is an object of the invention to provide a mobile terminal apparatus and a radio communication method for enabling feedback control information to be efficiently transmitted with an uplink control channel signal.

### SOLUTION TO PROBLEM

A mobile terminal apparatus of the invention comprises a reception section configured to receive a signal for each of a plurality of component carriers from a radio base station apparatus, a feedback control information generating section configured to generate feedback control information for each component carrier from the signal, a coding section configured to perform joint-coding for the feedback control information for each component carrier, and a mapping section configured to map the feedback control information coded by the joint-coding to subcarriers.

A radio communication method of the invention comprises in a mobile terminal apparatus the steps of receiving a signal for each of a plurality of component carriers from a radio base station apparatus, generating feedback control information for each component carrier from the signal, performing joint-coding for the feedback control information for each component carrier, mapping the feedback control information coded by the joint-coding to subcarriers, and transmitting an uplink transmission signal mapped to the subcarriers.

### TECHNICAL ADVANTAGE OF THE INVENTION

According to the invention, the mobile terminal apparatus receives a reference signal for each of a plurality of component carriers from a radio base station apparatus, generates feedback control information for each component carrier from the reference signal, performs joint-coding on the feedback control information for each component carrier, maps the feedback control information coded by the joint-coding to subcarriers, and transmits an uplink transmission signal mapped to the subcarriers, and therefore, it is possible to efficiently transmit the feedback control information with an uplink control channel signal.

### BRIEF DESCRIPTION OF THE DRAWINGS

FIG. 1 is a diagram to explain a configuration of a signal in uplink;
FIGs . 2(a) and 2(b) are diagrams illustrating subframe structures of an uplink control channel signal;
FIG. 3 is a diagram illustrating a schematic configuration of a mobile terminal apparatus according to Embodiment 1 of the invention;
FIG. 4(a) is a diagram to explain orthogonal multiplexing by cyclic shift using CAZAC code sequences, FIG. 4(b) is a diagram to explain orthogonal multiplexing by block spreading;
FIG. 5 is a diagram to explain a transmission method of an uplink control channel signal;
FIGs. 6(a) and 6(b) are diagrams to explain formats to transmit the uplink control channel signal in mobile terminal apparatuses according to Embodiments 1 and 2 of the invention;
Fig. 7(a) and 7(b) are diagrams to explain formats to transmit the uplink control channel signal in the mobile terminal apparatus according to Embodiment 1 of the invention;
FIGs. 8(a) and 8(b) are diagrams to explain formats to transmit the uplink control channel signal in the mobile terminal apparatus according to Embodiment 1 of the invention;
FIG. 9 is a diagram illustrating a schematic configuration of a radio base station apparatus according to Embodiment 1 of the invention;
FIG. 10 is a diagram illustrating a schematic configuration of a mobile terminal apparatus according to Embodiment 3 of the invention; and
FIG. 11 is a diagram illustrating a schematic configuration of a radio base station apparatus according to Embodiment 3 of the invention.

### DESCRIPTION OF EMBODIMENTS

Embodiments of the invention will specifically be described below with reference to accompanying drawings.

### (Embodiment 1)

This Embodiment describes a case where signals from a plurality of users is identified using the cyclic shift of CAZAC code sequences, and CQI signals that are feedback control information are transmitted.

When uplink control channel signals of a plurality of users are multiplexed on the PUCCH, the uplink control channel signals are orthogonally multiplexed so that the radio base station apparatus is capable of dividing the uplink control channel signals for each user. As such an orthogonally multiplexing method, there is an orthogonally multiplexing method using an orthogonally multiplexing method using the cyclic shift of CAZAC (Constant Amplitude Zero Auto Correlation) code sequences.

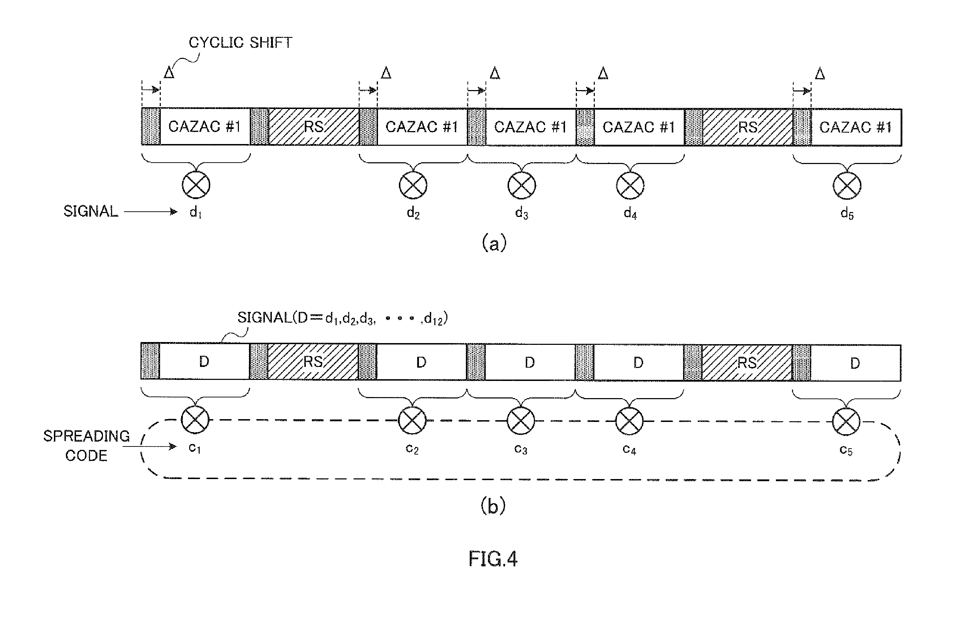

The orthogonally multiplexing method using the cyclic shift of CAZAC code sequences is an orthogonally multiplexing method employing the fact that sequence CAZAC#1(Δp) obtained by cyclically shifting a CAZAC code sequence with code length L by Δp is mutually orthogonal to sequence CAZAC#1(Δq) obtained by cyclically shifting the CAZAC code sequence with code length L by Δq. Accordingly, in this method, by modulating SC-FDMA symbols in which control information is multiplexed using CAZAC code sequences with varied cyclic shift amounts, uplink control channel signals are orthogonally multiplexed for each user. For example, as shown in FIG. 4(a), an uplink control channel signal with the CQI subframe structure is modulated with the CAZAC code sequence with a particular cyclic shift amount (Δ). At this point, SC-FDMA symbols d₁ to d₁₀ in the same subframe are all modulated with the same CAZAC code sequence. Then, different cyclic shift amounts are assigned for each user, the SC-FDMA symbols in the subframe are modulated with the CAZAC code sequence with the cyclic shift amount assigned for each user, and it is thereby possible to actualize orthogonality among uplink control channel signals for each user. By this means, the radio base station apparatus is capable of dividing the uplink control signals for each user. In addition, the interval of the cyclic shift of the CAZAC code sequence assigned to the user is preferably set to be longer than the maximum delay amount of multipath.

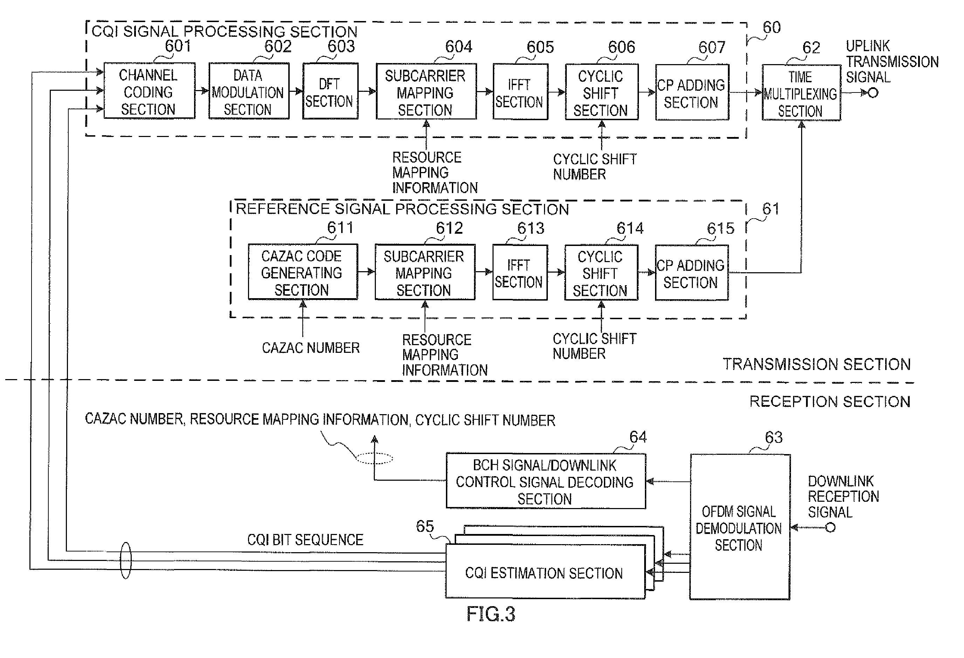

FIG. 3 is a diagram illustrating a schematic configuration of a mobile terminal apparatus according to Embodiment 1 of the invention. The mobile terminal apparatus as shown in FIG. 3 is provided with a transmission section and a reception section. The transmission section is provided with a CQI signal processing section 60, a reference signal processing section 61, and a time multiplexing section 62 that time-multiplexes the CQI signal and reference signal.

The CQI signal processing section 60 has a channel coding section 601 that performs channel coding on CQI bit sequences respectively obtained from reference signals of a plurality of CCs, a data modulation section 602 that performs data modulation on the channel coded signal, a DFT (Discrete Fourier Transform) section 603 that performs DFT on the data-modulated signal, a subcarrier mapping section 604 that maps the DFT-processed signal to subcarriers, an IFFT (Inverse Fast Fourier Transform) section 605 that performs IFFT on the mapped signal, a cyclic shift section 606 that cyclically shifts the IFFT-processed signal, and a CP (Cyclic Prefix) adding section 607 that adds a CP to the cyclically shifted signal.

The reference signal processing section 61 has a CAZAC code generating section 611 that generates a CAZAC code sequence associated with the CAZAC number, a subcarrier mapping section 612 that maps a signal modulated with the CAZAC code sequence to subcarriers, an IFFT section 613 that performs IFFT on the mapped signal, a cyclic shift section 614 that cyclically shifts the IFFT-processed signal, and a CP adding section 615 that adds a CP to the cyclically shifted signal.

The channel coding section 601 of the CQI signal processing section 60 performs channel coding on CQI bit sequences respectively obtained from reference signals of a plurality of CCs . Downlink signals are transmitted in a wide band comprised of a plurality of CCs. In this case, a downlink signal including a reference signal is transmitted in each CC, and the mobile terminal apparatus receives the reference signal of each CC. Then, a CQI estimation section 65, described below, generates a CQI bit sequence of each CC using the reference signal of each CC.

The channel coding section 601 combines the CQI bit sequence of each CC to perform joint-coding. By thus using joint-coding, it is possible to increase coding gain. This joint-coding is also an effective method to obtain diversity gain in multicarrier (multi-radio resource) transmission, The channel coding section 601 outputs the joint-coded signal to the data modulation section 602.

The data modulation section 602 modulates the channel-coded signal to a signal of polar coordinate component. The data modulation section 602 outputs the data-modulated signal to the DFT section 603. The DFT section 603 performs DFT on the data-modulated signal. The DFT section 603 outputs the DFT-processed signal to the subcarrier mapping section 604.

The subcarrier mapping section 604 maps the signal in the frequency domain to subcarriers. The subcarrier mapping section 604 maps the joint-coded signal (feedback control information) in a predetermined format.

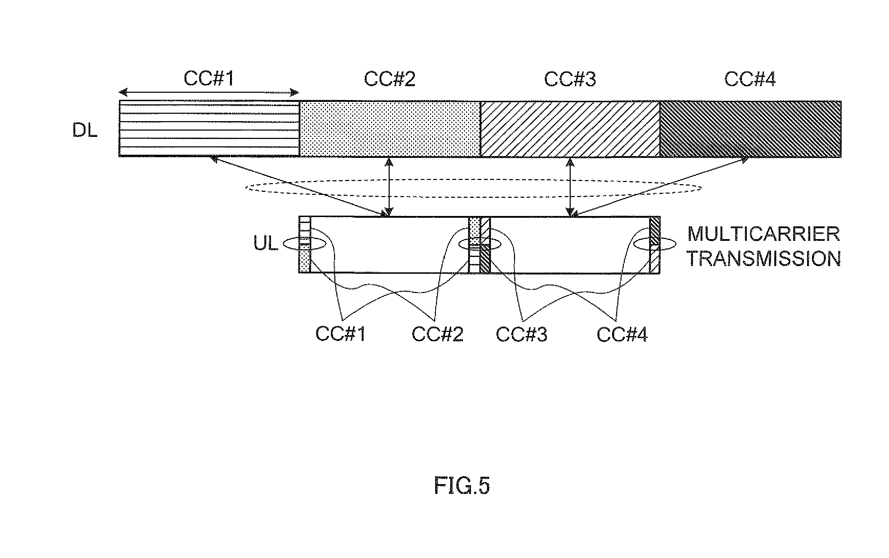

In the case of transmitting the feedback control information for a plurality of CCs on the PUCCH, it is first conceivable using transmission methods in the LTE system. In this case, as shown in FIG. 5, the method is of multicarrier transmission. For example, in the case that downlink (DL) CC#1 and downlink CC#2 are paired with uplink (UL) CC#1, when the feedback control information for downlink CC#1 and the feedback control information for downlink CC#2 is transmitted on the PUCCH at a transmission time interval (TTI), the transmission is multicarrier transmission as shown in FIG. 5.

Meanwhile, when an optimal transmission method to the wide band is applied with constrains to a pair of uplink and downlink in FIG. 5 removed, it is possible to achieve single-carrier transmission with little effect of peak power. For example, as described above, it is possible to transmit control information of a larger size than in the LTE system by performing joint-coding in channel coding.

Described herein is an example of the subcarrier mapping section 604 mapping the joint-coded signal.

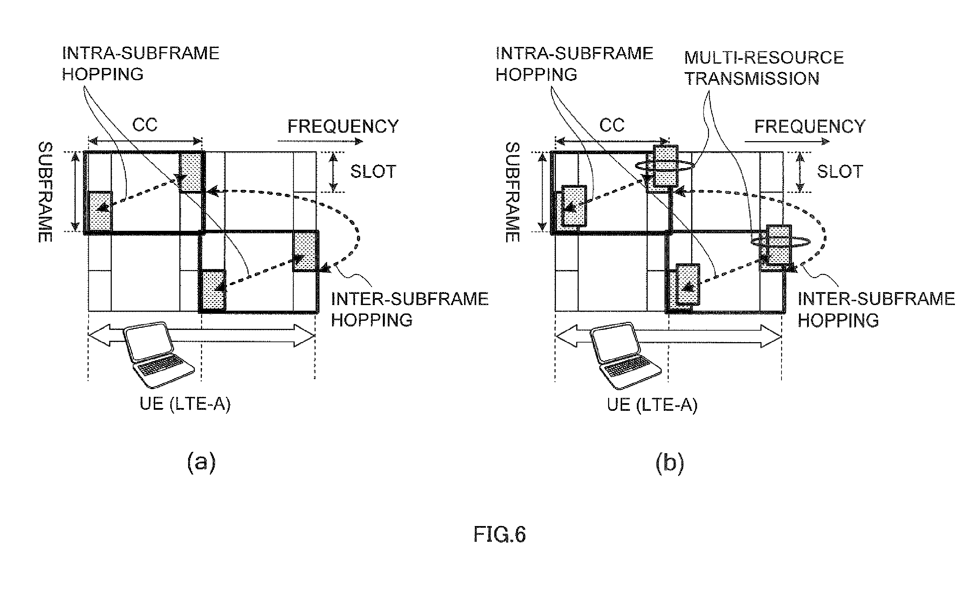

Described first is a case of mapping the joint-coded signal to one CC per transmission time interval (TTI). The format in this case is as shown in FIGs. 6(a) and 6(b).

The format as shown in FIG. 6(a) is a format of inter-subframe frequency hopping among a plurality of CCs . This format is high in backward compatibility with the LTE system. Then, when the PUCCH is transmitted in this format, the peak power is low, power consumption in the mobile terminal apparatus is small because one CC is used per TTI, and the number of transmission control bits per TTI is low. Further, in this format, in order to obtain frequency diversity gain, in addition to intra-subframe frequency hopping (Intra-TTI FH), it is also possible to adopt inter-subframe frequency hopping (Inter-TTI FH).

Further, the format as shown in FIG. 6(a) can be regarded as a format of intra-subframe frequency hopping in one CC when inter-subframe frequency hopping (Inter-TTI FH) is not adopted. This format is high in backward compatibility with the LTE system. Then, when the PUCCH is transmitted in this format, the peak power is low, power consumption in the mobile terminal apparatus is small because one CC is used per TTI, and the number of transmission control bits per TTI is low. Further, in this format, in order to obtain frequency diversity gain, intra-subframe frequency hopping (Intra-TTI FH) is adopted.

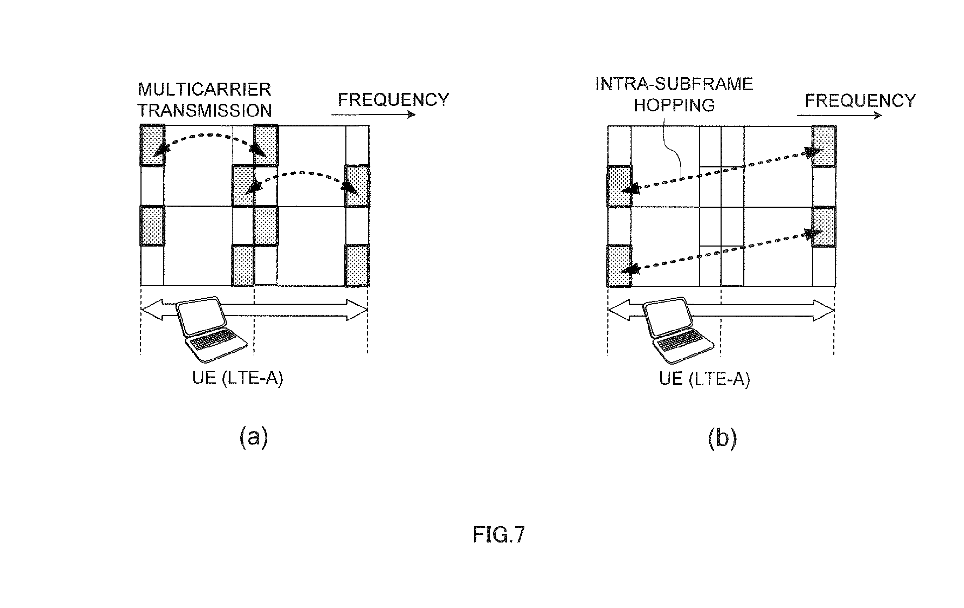

Described next is a case of mapping the joint-coded signal to a plurality of CCs per transmission time interval (TTI). The format in this case is as shown in FIGs. 7(a) and 7(b).

The format as shown in FIG. 7(a) is a format of multicarrier transmission in a plurality of CCs. This format is high in backward compatibility with the LTE system. Further, in this format, intra-subframe frequency hopping (Intra-TTI FH) and maximal ratio combining are adopted in order to obtain frequency diversity gain.

The format as shown in FIG. 7(b) is a format of intra-subframe frequency hopping in a plurality of CCs. When the PUCCH is transmitted in this format, the peak power is low, and the number of transmission control bits per TTI is low. In this format, intra-subframe frequency hopping (Tntra-TTT FH) wider than in the LTE system is adopted in order to obtain frequency diversity gain.

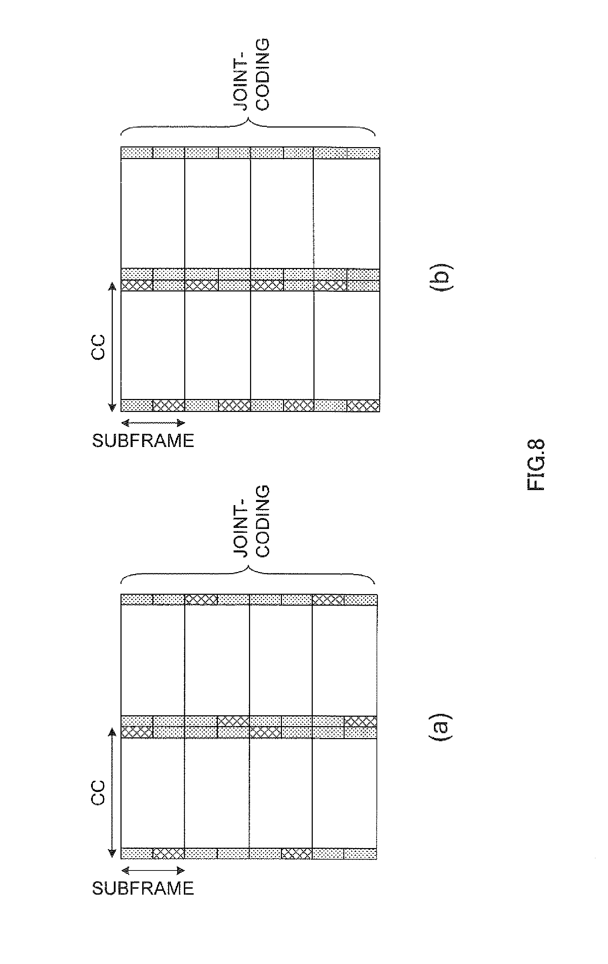

As shown in FTGs. 8(a) and 8(b), the subcarrier mapping section 604 is capable of mapping the joint-coded signal in the format of frequency hopping among a plurality of subframes. Since the joint-coded signal is thus mapped over a plurality of TTIs, in addition to intra-subframe frequency hopping (Intra-TTI FH), in FIG. 8(a), it is possible to obtain the frequency diversity effect by inter-subframe frequency hopping (Inter-TTI FH). Further, by adopting such a format, it is possible to perform joint-coding on control information of large size, and to obtain high coding gain. By this means, it is possible to apply turbo coding and the like suitable for the large bit size.

The subcarrier mapping section 604 outputs the signal mapped as described above to the IFFT section 605. The IFFT section 605 performs IFFT on the mapped signal to transform into a signal in the time domain. The IFFT section 605 outputs the IFFT-processed signal to the cyclic shift section 606.

The cyclic shift section 606 shifts the signal in the time domain by a predetermined cyclic shift amount. By this cyclic shift, the sequence of SC-FDMA symbols included in a unit block is shifted. In addition, the cyclic shift amount varies for each user, and is associated with the cyclic shift number. The cyclic shift section 606 outputs the cyclically shifted signal to the CP adding section 607.

The CP adding section 607 adds a CP to the cyclically shifted signal. The CP adding section 607 outputs the CP-added signal to the time multiplexing section 62.

The CAZAC code generating section 611 in the reference signal processing section 61 prepares the CAZAC code sequence associated with the CAZAC number assigned to the user, and modulates the reference signal with the CAZAC code sequence. The CAZAC code generating section 611 outputs the modulated reference signal to the subcarrier mapping section 612.

The subcarrier mapping section 612 maps the signal in the frequency domain to subcarriers. The subcarrier mapping section 612 outputs the mapped reference signal to the IFFT section 613. The IFFT section 613 performs IFFT on the mapped signal to transform into a reference signal in the time domain. The IFFT section 613 outputs the IFFT-processed reference signal to the cyclic shift section 614.

The cyclic shift section 614 shifts the reference signal in the time domain by a predetermined cyclic shift amount, In addition, the cyclic shift amount varies for each user, and is associated with the cyclic shift number. The cyclic shift section 614 outputs the reference signal cyclically shifted to the CP adding section 615 . The CP adding section 615 adds a CP to the reference signal cyclically shifted. The CP adding section 615 outputs the CP-added reference signal to the time multiplexing section 62.

The time multiplexing section 62 time-multiplexes the signal from the CQI signal processing section 60 and the reference signal from the reference signal processing section 61 to be a transmission signal including the uplink control channel signal.

The reception section has an OFDM signal demodulation section 63 that demodulates an OFDM signal, a BCH (Broadcast Channel) signal/downlink control signal decoding section 64 that decodes a BCH signal and Downlink control signal, and CQI estimation sections 65 that estimate the CQI using the reference signal included in the downlink signal.

The OFDM signal demodulation section 63 receives a downlink OFDM signal to demodulate. In other words, the section 63 removes the CP from the downlink OFDM signal, performs Fast Fourier Transform, demaps from the subcarriers, performs Inverse Discrete Fourier Transform (IDFT), and performs data demodulation. The OFDM signal demodulation section 63 outputs the data-demodulated signal to the BCH signal/downlink control signal decoding section 64. Further, the OFDM signal demodulation section 63 outputs the reference signal of each CC to the CQI estimation section 65 for each CC.

The BCH signal/downlink control signal decoding section 64 decodes the data-demodulated signal, and obtains the CAZAC number, resource mapping information (the number of CCs, the number of subcarriers) (including the resource block number), and the cyclic shift number. The BCH signal/downlink control signal decoding section 64 outputs the CAZAC number to the CAZAC code generating section 611, outputs the resource mapping information to the subcarrier mapping sections 604 and 612, and outputs the cyclic shift number to the cyclic shift sections 606 and 614.

The CQI estimation section 65 estimates the CQI used in scheduling, adaptive control and the like in the radio base station apparatus, using the reference signal of each CC, and generates a CQI bit sequence. The CQI estimation section 65 outputs the CQI bit sequence of each CC to the channel coding section 601.

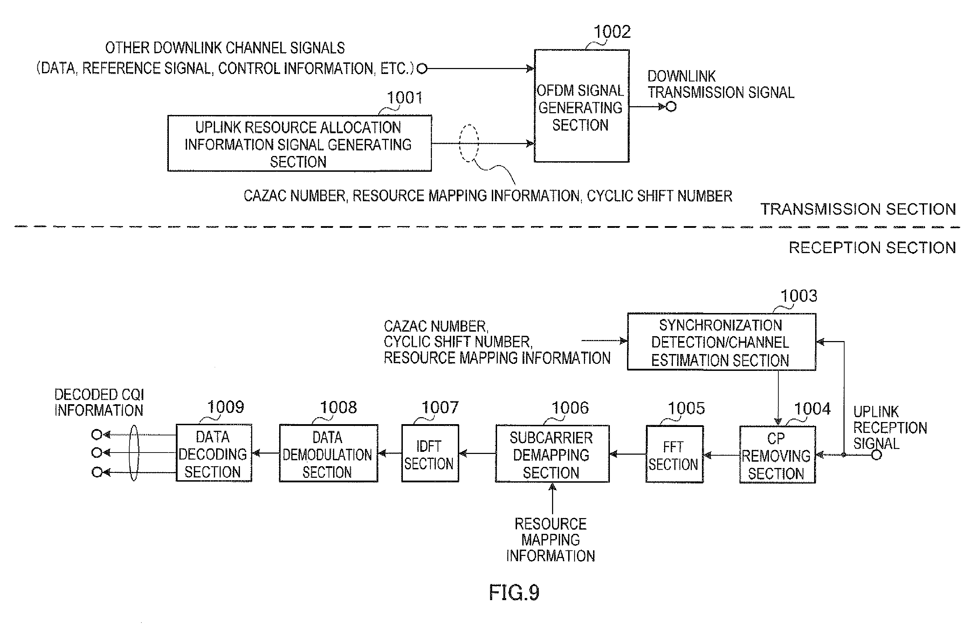

FIG. 9 is a diagram illustrating a schematic configuration of the radio base station apparatus according to Embodiment 1 of the invention. The radio base station apparatus as shown in FIG. 9 is provided with a transmission section and a reception section. The transmission section has an uplink resource allocation information generating section 1001, and an OFDM signal generating section 1002 that multiplexes other downlink channel signals and uplink resource allocation information signal to generate an OFDM signal. The other downlink channel signals include data, reference signal, control signal, etc. and the uplink resource allocation information signal includes the CAZAC number, resource mapping information and the cyclic shift number.

In addition, the CAZAC number, resource mapping information and the cyclic shift number may be transmitted to the mobile terminal apparatus on the BCH, or may be transmitted to the mobile terminal apparatus on the PDCCH. Alternately, the CAZAC number, resource mapping information and the cyclic shift number may be notified to the mobile terminal apparatus by an upper layer.

With respect to the downlink signal including the other downlink channel signals and uplink resource allocation information signal, the OFDM signal generating section 1002 performs Discrete Fourier Transform (DFT), maps to subcarriers, performs Inverse Fast Fourier Transform (IFFT), adds a CP, and thereby generates a downlink transmission signal.

The reception section has a CP removing section 1004 that removes the CP from a reception signal, an FFT section 1005 that performs Fast Fourier Transform (FFT) on the reception signal, a subcarrier demapping section 1006 that demaps the FFT-processed signal, an IDFT section 1007 that performs Inverse Discrete Fourier Transform (IDFT) on the demapped signal, a data demodulation section 1008 that performs data demodulation on the IDFT-processed signal, a data decoding section 1009 that performs data decoding on the data-demodulated signal, and a synchronization detection/channel estimation section 1003 that performs synchronization detection and channel estimation using the reference signal.

The CP removing section 1004 removes a portion corresponding to the CP from the reception signal, and extracts an effective signal portion. The CP removing section 1004 outputs the CP-removed signal to the FFT section 1005. The FFT section 1005 performs FFT on the reception signal to transform into a signal in the frequency domain. The FFT section 1005 outputs the FFT-processed signal to the subcarrier demapping section 1006.

The subcarrier demapping section 1006 extracts a CQI signal that is an uplink control channel signal from the signal in the frequency domain using the resource mapping information, The subcarrier demapping section 1006 outputs the extracted CQI signal to the IDFT section 1007. The IDFT section 1007 performs IDFT on the extracted CQI signal to transform into a signal in the time domain. Further, the IDFT section 1007 outputs the CQI signal transformed into the time domain to the data demodulation section 1008.

The data demodulation section 1008 performs data demodulation on the CQI signal to output to the data decoding section 1009. The data decoding section 1009 performs data decoding on the demodulated CQI signal to output as CQI information.

The synchronization detection/channel estimation section 1003 divides the reference signals orthogonally multiplexed using the cyclic shift, using the cyclic shift number. The uplink control channel signal from the mobile terminal apparatus is cyclically shifted with a different shift amount for each user. Accordingly, by being cyclically shifted in the opposite direction by the same cyclic shift amount as the cyclic shift amount provided in the mobile terminal apparatus, it is possible to obtain the reference signal that is not cyclically shifted. In addition, the cyclic shift amount varies for each user, and is associated with the cyclic shift number. Therefore, the synchronization detection/channel estimation section 1003 cyclically shifts in the opposite direction using the cyclic shift amount associated with the cyclic shift number. By this means, it is possible to isolate the signal (reference signal) of the user associated with the cyclic shift number. Further, the synchronization detection/channel estimation section 1003 extracts the reference signal from the signal in the frequency domain using the resource demapping information. Furthermore, the synchronization detection/channel estimation section 1003 despreads the reference signal using the CAZAC number. Accordingly, the synchronization detection/channel estimation section 1003 specifies the CAZAC code sequence from the CAZAC number associated with the CAZAC code sequence, despreads the reference signal using the CAZAC code sequence, and obtain the reference signal. Then, the synchronization detection/channel estimation section 1003 performs synchronization detection and channel estimation using the obtained reference signal, and outputs the channel estimation value to the CP removing section 1004.

Described is a radio communication method according to the invention using the radio base station apparatus and mobile terminal apparatus having the above-mentioned configurations. In the radio communication method according to the invention, the mobile terminal apparatus receives the reference signal for each of a plurality of CCs from the radio base station apparatus, generates a CQI signal for each CC from the reference signal, joint-codes the CQI signal for each CC, maps the joint-coded CQI signal to subcarriers, and transmits an uplink transmission signal mapped to the subcarriers.

First, the OFDM signal generating section 1002 of the radio base station apparatus multiplexes the uplink resource allocation information including the CAZAC number, resource mapping information (including the resource block number) and the cyclic shift number, and the other downlink channel signals to be an OFDM signal, and the OFDM signal is transmitted as a downlink transmission signal. The mobile terminal apparatus receives the downlink OFDM signal in the OFDM signal demodulation section 63 to demodulate. Then, the BCH signal/downlink control signal decoding section 64 extracts the CAZAC number, resource mapping information and the cyclic shift number, outputs the CAZAC number to the CAZAC code generating section 611, outputs the resource mapping information to the subcarrier mapping sections 604 and 612, and outputs the cyclic shift number to the cyclic shift sections 606 and 614.

The OFDM signal demodulation section 63 extracts reference signals for each CC included in the downlink reception signal to output to the CQI estimation sections 65. The CQI estimation sections 65 perform CQI estimation using the reference signals for each CC, and obtain CQI bit sequences for each CC. The CQI bit sequences are output to the channel coding section 601. The channel coding section 601 combines the CQI bit sequences for each CC to perform joint-coding. The joint-coded CQI signal is data-modulated, transformed by DFT, and then, mapped in the format as shown in FIG. 6(a), FIGs. 7(a), 7(b), and FIGs. 8(a), 8(b) in the subcarrier mapping section 604. In addition, subcarrier mapping is performed based on the resource mapping information.

The mapped CQI signal is transformed into a signal in the time domain by IFFT in the IFFT section 605, and is cyclically shifted associated with the cyclic shift number in the cyclic shift section 606. Next, the CP adding section 607 adds a CP to the cyclically shifted signal.

Meanwhile, the reference signal processing section 61 modulates the reference signal with the CAZAC code sequence. Subsequently, the modulated reference signal is mapped based on the resource mapping information, is transformed by IFFT, and then, is cyclically shifted associated with the cyclic shift number, and the cyclically shifted signal is provided with a CP.

Thus obtained CQI signal and reference signal are time-multiplexed in the format as shown in FIG 2(a), and is transmitted to the radio base station apparatus as an uplink transmission signal. The radio base station apparatus receives the uplink control channel signal that is orthogonally multiplexed among users, and removes the CP from the reception signal in the CP removing section 1004. Next, the FFT section 105 performs FFT on the signal divided for each user to be a signal in the frequency domain, the subcarrier demapping section 1006 demaps from the subcarriers based on the resource mapping information, and the IDFT section 1007 performs IDFT on the demapped signal to be a signal in the time domain.

Next, the data demodulation section 1008 performs data demodulation on the demapped signal, and then, the data decoding section 1009 decodes the signal to obtain the CQI information. The radio base station apparatus performs scheduling and adaptive control using the obtained CQI information.

Thus, in this Embodiment, the apparatus combines the CQI signals that are feedback control information for each CC to perform joint-coding, maps the resultant in an optimal format, and transmits the PUCCH signal, and therefore, it is possible to efficiently transmit also the feedback control information of large size.

### (Embodiment 2)

This Embodiment describes a case of transmitting the PUCCH signal with multi-radio resources (multi-code transmission). Described herein is the case that the feedback control information is the CQI signal.

A configuration of a mobile terminal apparatus according to Embodiment 2 of the invention is the same as the configuration as shown in FIG. 3. In the mobile terminal apparatus, the channel coding section 601 performs joint-coding (code-multiplexing) on data bits corresponding to the number of codes to transmit, and the data modulation section 602 performs data modulation on the CQI signal. The cyclic shift section 606 cyclically shifts the IFFT-processed signal associated with a plurality of designated cyclic shift numbers (i.e. code numbers), then code-multiplexes the signals used different cyclic shifts, and inputs the resultant to the CP adding section 607. The other processing is the same as in Embodiment 1, and specific descriptions thereof are omitted.

Thus joint-coded CQI signal is transformed by DFT, and then, is mapped in a predetermined format in the subcarrier mapping section. In this case, the joint-coded signal is mapped to one CC per one transmission time interval (TTI).

The format as shown in FIG. 6(b) is a format of inter-subframe frequency hopping among a plurality of CCs. This format is high in backward compatibility with the LTE system. Then, when the PUCCH is transmitted in this format, since one CC is used per TTI, power consumption in the mobile terminal apparatus is small, and the number of transmission control bits per TTI is low. Further, in this format, in order to obtain frequency diversity gain, in addition to intra-subframe frequency hopping (Intra-TTI FH), inter-subframe frequency hopping (Inter-TTI FH) is adopted.

Further, the format as shown in FIG. 6(b) can be regarded as a format of intra-subframe frequency hopping in one CC when inter-subframe frequency hopping (Inter-TTI FH) is not adopted. This format is high in backward compatibility with the LTE system. Then, when the PUCCH is transmitted in this format, since one CC is used per TTI, power consumption in the mobile terminal apparatus is small, and the number of transmission control bits per TTI is low. Further, in this format, in order to obtain frequency diversity gain, intra-subframe frequency hopping (Intra-TTI FH) is adopted.

A configuration of a radio base station apparatus according to Embodiment 2 of the invention is the same as the configuration shown in FIG. 9. In addition, in the radio base station apparatus is added the processing for dividing the signals that are code-multiplexed using a plurality of cyclic shifts using corresponding cyclic shift numbers. The other processing is the same as in Embodiment 1, and specific descriptions thereof are omitted.

Thus, also in this Embodiment, the apparatus combines the CQI signals that are feedback control information for each CC to perform joint-coding, maps the resultant in an optimal format, and transmits the PUCCH signal, and therefore, it is possible to efficiently transmit also the feedback control information of large size.

### (Embodiment 3)

This Embodiment describes a case where signals from a plurality of users are identified using the cyclic shift and block spreading, and ACK/NACK signals that are feedback control information are transmitted.

When uplink control channel signals of a plurality of users are multiplexed on the PUCCH, the uplink control channel signals are orthogonally multiplexed so that the radio base station apparatus is capable of dividing the uplink control channel signals for each user. As such an orthogonally multiplexing method, there are an orthogonally multiplexing method using the cyclic shift of CAZAC (Constant Amplitude Zero Auto Correlation) code sequences, and an orthogonally multiplexing method using block spreading.

The orthogonally multiplexing method using the cyclic shift of CAZAC code sequences is an orthogonally multiplexing method employing the fact that sequence CAZAC#1(Δp) obtained by cyclically shifting a CAZAC code sequence with code length L by Δp is mutually orthogonal to sequence CAZAC#1(Δq) obtained by cyclically shifting the CAZAC code sequence with code length L by Δq. Accordingly, in this method, by modulating SC-FDMA symbols in which control information is multiplexed using CAZAC code sequences with varied cyclic shift amounts, uplink control channel signals are orthogonally multiplexed for each user. For example, as shown in FIG. 4(a), an uplink control channel signal with the CQI subframe structure is modulated with the CAZAC code sequences with a particular cyclic shift amount (Δ). At this point, SC-FDMA symbols d₁ to d₁₀ in the same subframe are all modulated with the same CAZAC code sequence. Then, different cyclic shift amounts are assigned for each user, the SC-FDMA symbols in the subframe are modulated with the CAZAC code sequence with the cyclic shift amount assigned for each user, and it is thereby possible to actualize orthogonality among uplink control channel signals for each user. By this means, the radio base station apparatus is capable of dividing the uplink control signals for each user. In addition, the interval of the cyclic shift of the CAZAC code sequence assigned to the user is preferably set to be longer than the maximum delay amount of multipath.

The orthogonally multiplexing method using block spreading is an orthogonally multiplexing method using orthogonal codes. Accordingly, in this method, the ACK/NACK signal is spread with the orthogonal code, and the spread signal is mapped. For example, as shown in FIG. 4(b), the CQI (control information) is spread with the spreading code X, and spread signals c₁ to c₅ obtained by spreading are mapped to SC-FDMA symbols (the first symbol, the third symbol to the fifth symbol, the seventh symbol) . At this point, 12 information symbols (D=d₁ to d₁₂) are multiplexed into one SC-FDMA symbol. By this means, it is possible to actualize orthogonality among uplink control channel signals for each user, and the radio base station apparatus is capable of dividing the uplink control channel signals for each user.

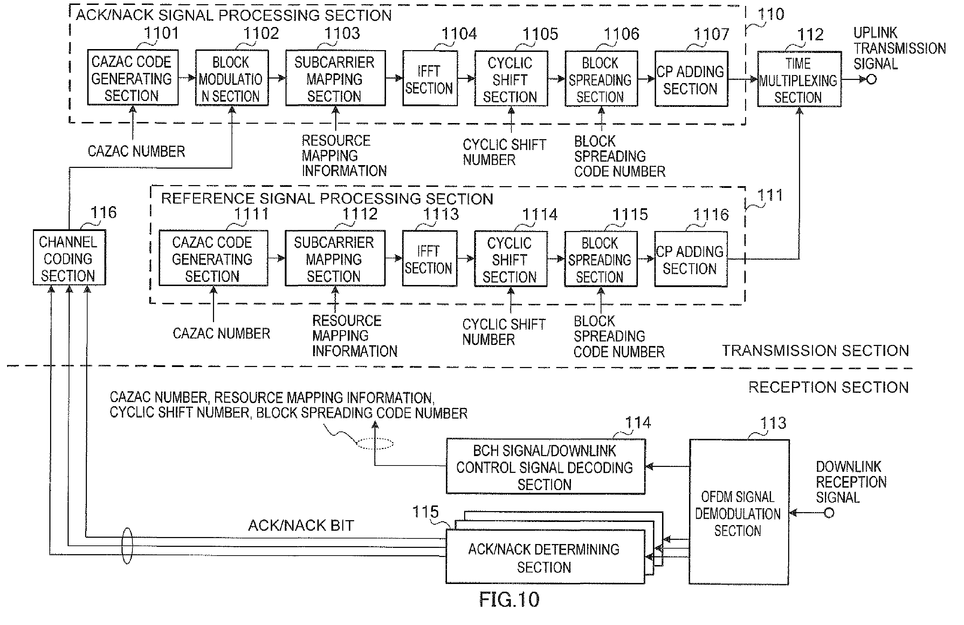

FIG. 10 is a diagram illustrating a schematic configuration of a mobile terminal apparatus according to Embodiment 3 of the invention. The mobile terminal apparatus as shown in FIG. 10 is provided with a transmission section and a reception section. The transmission section is provided with an ACK/NACK signal processing section 110, a reference signal processing section 111, a time multiplexing section 112 that time-multiplexes the ACK/NACK signal and reference signal, and a channel coding section 116 that combines ACK/NACK bits for each CC to perform joint-coding.

The ACK/NACK signal processing section 110 has a CAZAC code generating section 1101 that generates a CAZAC code sequence associated with the CAZAC number, a block modulation section 1102 that performs modulation using the CAZAC code sequence every a predetermined number of symbols (block), a subcarrier mapping section 1103 that maps the block-modulated signal to subcarriers, an IFFT section 1104 that performs IFFT on the mapped signal, a cyclic shift section 1105 that cyclically shifts the IFFT-processed signal, a block spreading section 1106 that block-spreads the cyclically shifted signal, and a CP adding section 1107 that adds a CP to the block-spread signal. In addition, subcarrier mapping section 1103, IFFT section 1104, and CP adding section 1107 are the same as the subcarrier mapping section 604, IFFT section 605 and CP adding section 607 in Embodiment 1, respectively, and specific descriptions thereof are omitted.

The reference signal processing section 111 has a CAZAC code generating section 1111 that generates a CAZAC code sequence associated with the CAZAC number, a subcarrier mapping section 1112 that maps the CAZAC-coded signal to subcarriers, an IFFT section 1113 that performs IFFT on the mapped signal, a cyclic shift section 1114 that cyclically shifts the IFFT-processed signal, a block spreading section 1115 that block-spreads the cyclically shifted signal, and a CP adding section 1116 that adds a CP to the block-spread signal. In addition, the CAZAC code generating section 1111, subcarrier mapping section 1112, IFFT section 1113, cyclic shift section 1114 and CP adding section 1115 are the same as the CAZAC code generating section 611, subcarrier mapping section 612, IFFT section 613, cyclic shift section 614 and CP adding section 615 in Embodiment 1, respectively, and specific descriptions thereof are omitted.

The block modulation section 1102 performs modulation using the CAZAC code sequence every a predetermined number of symbols (block). In other words, a predetermined number of SC-FDM symbols are made a block, and the section 1102 performs modulation using the CAZAC code sequence for each unit block. More specifically, each code of the CAZAC code sequence is multiplied by each SC-FDMA symbol. The block modulation section 1102 outputs the block-modulated signal to the subcarrier mapping section 1103.

The block spreading sections 1106 and 1115 spread the signals in the time domain with the block spreading codes. In addition, the block spreading code varies for each user, and is associated with the block spreading code number. The block spreading sections 1106 and 1115 output the spread signals to the CP adding sections 1107 and 1116, respectively.

The reception section has an OFDM signal demodulation section 113 that demodulates an OFDM signal, a BCH signal/downlink control signal decoding section 114 that decodes a BCH signal and downlink control signal, and ACK/NACK determining sections 115 that determine whether or not a downlink shared data channel signal (PDSCH (Physical Downlink Shared Channel)) is received without error. In addition, the OFDM signal demodulation section 113 and BCH signal/downlink control signal decoding section 114 are respectively the same as the OFDM signal demodulation section 63 and BCH signal/downlink control signal decoding section 64 in Embodiment 1, and specific descriptions thereof are omitted.

The ACK/NACK determining section 115 determines whether or not the received Downlink shared data channel signal (PDSCH signal) is received without error, or when errors exist, determines whether or not the errors are within an allowable range, and outputs a determination result. The determination result is expressed by transmittal confirmation information represented by acknowledgment (ACK bit) or negative acknowledgement (NACK bit). The ACK/NACK determining section 115 outputs an ACK/NACK bit to the channel coding section 116 for each CC.

The BCH signal/downlink control signal decoding section 114 decodes the data-demodulated signal, and obtains the CAZAC number, resource mapping information (the number of CCs, the number of subcarriers) (including the resource block number), the cyclic shift number, and the block spreading code number. The BCH signal/downlink control signal decoding section 114 outputs the CAZAC number to the CAZAC code generating sections 1101 and 1111, outputs the resource mapping information to the subcarrier mapping sections 1103 and 1112, outputs the cyclic shift number to the cyclic shift sections 1105 and 1114, and outputs the block spreading code number to the block spreading sections 1106 and 1115.

The channel coding section 116 combines the ACK/NACK bit sequence of each CC to perform joint-coding. By thus using joint-coding, it is possible to increase coding gain. This joint-coding is also an effective method to obtain diversity gain in multicarrier (multi-radio resource) transmission. The channel coding section 116 outputs the joint-coded signal to the block modulation section 1102.

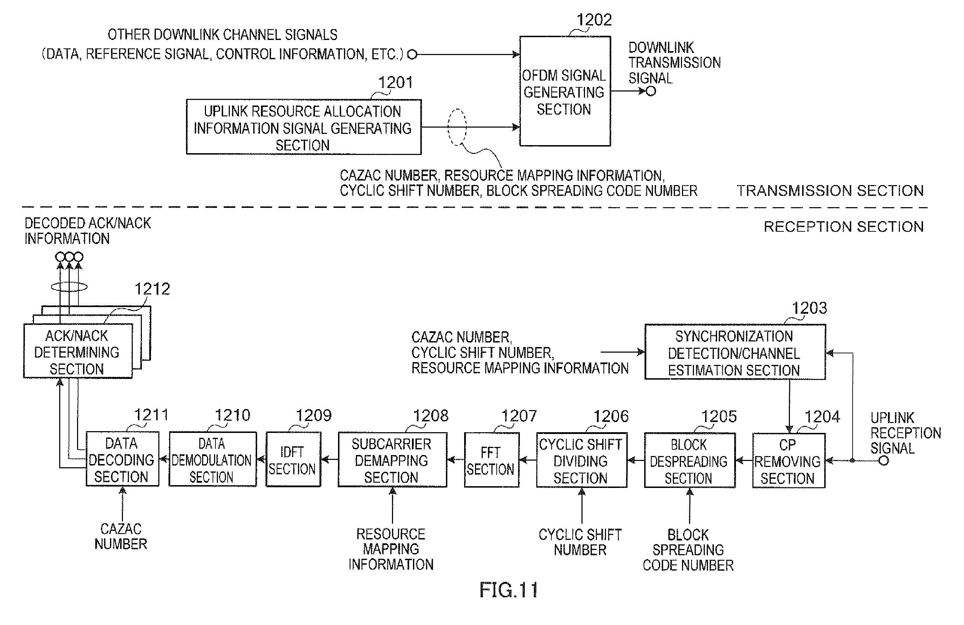

FIG. 11 is a diagram illustrating a schematic configuration of the radio base station apparatus according to Embodiment 3 of the invention. The radio base station apparatus as shown in FIG. 11 is provided with a transmission section and reception section. The transmission section has an uplink resource allocation information generating section 1201, and an OFDM signal generating section 1202 that multiplexes other downlink channel signals and uplink resource allocation information signal to generate an OFDM signal. The other downlink channel signals include data, reference signal, control signal, etc. and the uplink resource allocation information signal includes the CAZAC number, resource mapping information, the cyclic shift number and the block spreading code number. In addition, the uplink resource allocation information generating section 1201 and OFDM signal generating section 1202 are respectively the same as the uplink resource allocation information generating section 1001 and OFDM signal generating section 1002 in Embodiment 1, and specific descriptions thereof are omitted.

In addition, the CAZAC number, resource mapping information, the cyclic shift number and the block spreading code number may be transmitted to the mobile terminal apparatus on the BCH, or may be transmitted to the mobile terminal apparatus on the PDCCH. Alternately, the CAZAC number, resource mapping information, and the cyclic shift number may be notified to the mobile terminal apparatus by an upper layer.

The reception section has a CP removing section 1204 that removes the CP from a reception section, a block despreading section 1205 that despreads the orthogonally multiplexed reception signal with a spreading code associated with the block spreading code number, a cyclic shift dividing section 1206 that divides the reception signal orthogonally multiplexed using the cyclic shifts using the cyclic shift numbers, an FFT section 1207 that performs FFT on the signal subjected to cyclic shift division, a subcarrier demapping section 1208 that demaps the FFT-processed signal, an IDFT section 1209 that performs IDFT on the demapped signal, a data demodulation section 1210 that performs data demodulation on the IDFT-processed signal, a decoding section 1211 that decodes the signal demodulated using the CAZAC number, ACK/NACK determining sections 1212 that make an ACTC/NACK determination using the decoded reception signal for each CC, and a synchronization detection/channel estimation section 1203 that performs synchronization detection and channel estimation using the reference signal. In addition, the synchronization detection/Channel estimation section 1203, FFT section 1207, subcarrier demapping section 1208, IDFT section 1209 and data demodulation section 1210 are the same as the synchronization detection/channel estimation section 1003, FFT section 1005, subcarrier demapping section 1006, IDFT section 1007 and data demodulation section 1008 in Embodiment 1, respectively, and specific descriptions thereof are omitted.

The block despreading section 1205 divides the reception signal that is code-multiplexed using the block spreading code, using the block spreading code number. The PUCCH signal from the mobile terminal apparatus is spread with the block spreading code varying for each user. Accordingly, by despreading using the same block spreading code as the block spreading code used in spreading modulation in the mobile terminal apparatus, it is possible to obtain the uplink control channel signal without being spread. In addition, the block spreading code varies for each user, and is associated with the block spreading code number. Therefore, the block despreading section 1205 performs despreading using the block spreading code associated with the block spreading code number. By this means, it is possible to isolate the signal (PUCCH signal) of the user associated with the block spreading number. The block despreading section 1205 outputs the isolated signal to the cyclic shift dividing section 1206.

The cyclic shift dividing section 1206 divides the reception signal orthogonally multiplexed using the cyclic shifts, using the cyclic shift numbers. The PUCCH signal from the mobile terminal apparatus is cyclically shifted with a different shift amount for each user. Accordingly, by being cyclically shifted in the opposite direction by the same cyclic shift amount as the cyclic shift amount provided in in the mobile terminal apparatus, it is possible to obtain the uplink control channel signal that is not cyclically shifted. In addition, the cyclic shift amount varies for each user, and is associated with the cyclic shift amount. Therefore, the cyclic shift dividing section 1206 cyclically shifts in the opposite direction using the cyclic shift amount associated with the cyclic shift number. By this means, it is possible to isolate the signal (PUCCH) of the user associated with the cyclic shift number. The cyclic shift dividing section 1206 outputs the isolated signal to the FFT section 1207.

The decoding section 1211 despreads the data-demodulated signal, using the CAZAC code sequence, and obtains an uplink signal. The section 1211 outputs the uplink signal to the ACK/NACK determining sections 1212.

The ACK/NACK determining section 1212 determines whether or not the received uplink signal is received without error, or when errors exist, determines whether or not the errors are within an allowable range, and outputs a determination result. The determination result is expressed by transmittal confirmation information represented by acknowledgment (ACK bit) or negative acknowledgement (NACK bit). The ACK/NACK determining section 1212 outputs an ACK/NACK bit for each CC. The ACK/NACK bit is sent to a retransmission control processing section (not shown)

Described is a radio communication method according to the invention using the radio base station apparatus and the mobile terminal apparatus having the above-mentioned configurations. In the radio communication method according to the invention, the mobile terminal apparatus receives a PDSCH signal for each of a plurality of CCs from the radio base station apparatus, generates an ACK/NACK signal from the PDSCH signal for each CC, performs oint-coding on the ACK/NACK signal for each CC, maps the joint-coded ACK/NACK signal to subcarriers, and transmits an uplink transmission signal mapped to the subcarriers.

First, the OFDM signal generating section 1202 in the radio base station apparatus multiplexes the uplink resource allocation information including the CAZAC number, resource mapping information (including the resource block number) and the cyclic shift number, and the other downlink channel signals to be an OFDM signal, and the OFDM signal is transmitted as a downlink transmission signal. The mobile terminal apparatus receives the downlink OFDM signal in the OFDM signal demodulation section 113 to demodulate. Then, the BCH signal/downlink control signal decoding section 114 extracts the CAZAC number, the resource mapping information, the cyclic shift number and the block spreading code number, outputs the CAZAC number to the CAZAC code generating sections 1101 and 1111, outputs the resource mapping information to the subcarrier mapping sections 1103 and 1112, outputs the cyclic shift number to the cyclic shift sections 1105 and 1114, and outputs the block spreading code number to the block spreading sections 1106 and 1115.

The OFDM signal demodulation section 113 extracts the PDSCHs for each CC included in the downlink reception signal to output to the ACK/NACK determining sections 115. The ACK/NACK determining sections 115 determine ACK/NACK using the PDSCH signals for each CC, and obtain ACK/NACK bit sequences for each CC. The ACK/NACK bit sequences are output to the channel coding section 116. The channel coding section 116 combines the ACK/NACK bit sequences for each CC to perform joint-coding. The joint-coded ACK/NACK signal is subjected to block modulation, and then, is mapped in the format as shown in FIG. 6(a), FIGs. 7(a), 7(b), and FIGs. 8(a), 8(b) in the subcarriermapping section 1103. In addition, subcarrier mapping is performed based on the resource mapping information.

The mapped ACK/NACK signal is transformed into a signal in the time domain by IFFT in the IFFT section 1104, and is cyclically shifted associated with the cyclic shift number in the cyclic shift section 1105. Next, the block spreading section 1106 performs block spreading on the signal cyclically shifted using the block spreading code, and the CP adding section 1107 adds a CP to the resultant.

Meanwhile, the reference signal processing section 111 modulates the reference signal with the CAZAC code sequence. Subsequently, the modulated reference signal is mapped based on the resource mapping information, is transformed by IFFT, and then, is cyclically shifted associated with the cyclic shift number. Then, the signal is subjected to block spreading, and is provided with a CP.

Thus obtained ACK/NACK signal and reference signal are time-multiplexed in the format as shown in FIG 2(b), and is transmitted to the radio base station apparatus as an uplink transmission signal. The radio base station apparatus receives the uplink control channel signal that is orthogonally multiplexed among users, and removes the CP from the reception signal in the CP removing section 1204. Next, the block despreading section 1205 despreads the CP-removed signal with the block spreading code used in the mobile terminal apparatus. The cyclic shift dividing section 1206 cyclically shifts the despread signal in the opposite direction by the cyclic shift amount provided in the mobile terminal apparatus to divide into data of each user. Subsequently, the FFT section 1207 performs FFT on the signal divided for each user to be a signal in the frequency domain, the subcarrier demapping section 1208 demaps from the subcarriers based on the resource mapping information, and the IDFT section 1209 performs IDFT on the demapped signal to be a signal in the time domain.

Next, the data demodulation section 1210 performs data demodulation on the demapped signal, and then, the decoding section 1211 decodes the resultant using the CAZAC code and obtains user data. The user data is output to the ACK/NACK determining sections 1212. The ACK/NACK determining section 1212 determines whether or not the user data is received without error, or when errors exist, determines whether or not the errors are within an allowable range, and outputs an ACK/NACK bit for each CC as a determination result. The ACK/NACK bit is sent to a retransmission control processing section (not shown).

Thus, in this Embodiment, the apparatus combines the ACK/NACK signals that are feedback control information for each CC to perform joint-coding, maps the resultant in an optimal format, and transmits the PUCCH signal, and therefore, it is possible to efficiently transmit also the feedback control information of large size.

The present invention is not limited to the above-mentioned Embodiments, and is capable of being carried into practice with various modifications thereof. The above -mentioned Embodiment 1 describes the case that the feedback control information is the CQI signal, and Embodiment 3 describes the case that the feedback control information is the ACK/NACK signal, but the invention is not limited thereto, and is similarly applicable to the case where the feedback control information is all the feedback control information used in the LTE-A system including the CQI signal and ACK/NACK signal transmitted on the PUCCH. Further, the above-mentioned Embodiment 2 describes the case of using the cyclic shift of the CAZAC code sequence, but the invention is not limited thereto, and also in the case of using block spreading, multicarrier (multi-radio resource) transmission is similarly applicable.

Further, the number of processing sections and processing procedures in the above-mentioned description are capable of being carried into practice with modifications thereof as appropriate without departing from the scope of the invention. Furthermore, each element shown in the figures represents the function, and each function may be actualized by hardware or may be actualized by software. Moreover, the invention is capable of being carried into practice with modifications thereof as appropriate without departing from the scope of the invention.

The present application is based on Japanese Patent Application No.2009-063616 filed on March 16, 2009, entire content of which is expressly incorporated by reference herein.

## Claims

1. A mobile terminal apparatus comprising:
a reception section configured to receive a signal for each of a plurality of component carriers from a radio base station apparatus;
a feedback control information generating section configured to generate feedback control information for each component carrier from the signal;
a coding section configured to perform joint-coding for the feedback control information for each component carrier; and
a mapping section configured to map the feedback control information coded by the joint-coding to subcarriers.

2. The mobile terminal apparatus according to claim 1, wherein the mapping section maps the feedback control information coded by the joint-coding to one component carrier per transmission time interval.

3. The mobile terminal apparatus according to claim 2, wherein the mapping section maps the feedback control information coded by the joint-coding in a format of inter-subframe frequency hopping among the plurality of component carriers, in addition to a format of intra-subframe frequency hopping within a component carrier.

4. The mobile terminal apparatus according to claim 2, wherein the mapping section maps the feedback control information coded by the joint-coding in a format of intra-subframe frequency hopping in one component carrier.

5. The mobile terminal apparatus according to claim 1, further comprising:
a section configured to performs code multiplexing for the feedback control information coded by the joint-coding.

6. The mobile terminal apparatus according to claim 5, wherein the mapping section maps the feedback control information code-multiplexed in a format of inter-subframe frequency hopping among the plurality of component carriers, in addition to a format of intra-subframe frequency hopping within a component carrier.

7. The mobile terminal apparatus according to claim 5 , wherein the mapping section maps the feedback control information code-multiplexed in a format of intra-subframe frequency hopping in one component carrier.

8. The mobile terminal apparatus according to claim 1, wherein the mapping section maps the feedback control information coded by the joint-coding to the plurality of component carriers per transmission time interval.

9. The mobile terminal apparatus according to claim 8, wherein the mapping section maps the feedback control information coded by the joint-coding in a format of multicarrier transmission in a plurality of component carriers.

10. The mobile terminal apparatus according to claim 8 , wherein the mapping section maps the feedback control information coded by the joint-coding in a format of intra-subframe frequency hopping in a plurality of component carriers.

11. The mobile terminal apparatus according to claim 1, wherein the mapping section maps the feedback control information coded by the joint-coding in a format of frequency hopping among a plurality of subframes.

12. A radio communication method comprising:
in a mobile terminal apparatus,
receiving a signal for each of a plurality of component carriers from a radio base station apparatus;
generating feedback control information for each component carrier from the signal;
performing joint-coding for the feedback control information for each component carrier;
mapping the feedback control information coded by the joint-coding to subcarriers; and
transmitting an uplink transmission signal mapped to the subcarriers.

13. The radio communication method according to claim 12, further comprising:
in the mobile terminal apparatus,
performing code multiplexing for the feedback control information coded by the joint-coding.

14. The radio communication method according to claim 12, wherein the feedback control information coded by the joint-coding is mapped in a format of frequency hopping among a plurality of subframes.
